# EUROPEAN PATENT APPLICATION

(11) **EP 4 360 876 A1**
(43) Date of publication of application: **01.05.2024**
(21) Application number: 22828265.3
(22) Date of filing: 14.06.2022
(51) Int. Cl.: B32B 37/00, B25J 13/08, B26D 7/32, B26F 1/42, B65G 57/00

(54) **SHEET-LIKE WORKPIECE LAMINATING DEVICE AND METHOD**

(30) Priority: 22.06.2021 JP 2021102946
(71) Applicant: IHI Corporation, Tokyo 135-8710 (JP)
(72) Inventor: SUZUKI Shotaro, Tokyo 135-8710 (JP)
(74) Representative: Marks & Clerk LLP
(86) International application number: PCT/JP2022/023745
(87) International publication number: WO 2022/270348

(57) **Abstract**

An apparatus (1) for stacking a sheet-shaped workpiece includes a pick-and-place machine (4) that holds and picks up a sheet-shaped workpiece cut out from a sheet material (S) and places the workpiece onto a stacking position (PL) to stack sequentially, a detector (44a) that is provided in the pick-and-place machine (4) and detects a position of the workpiece in a lifted state by the pick-and-place machine (4) and a controller (6) that controls the pick-and-place machine (4). The controller (6) calculates a position shift of the workpiece based on the position of the workpiece detected by the detector (44a) and adjusts, based on the calculated position shift, a holding position of a workpiece by the pick-and-place machine (4) in a future operation.

## Description

### TECHNICAL FIELD

The present disclosure relates to an apparatus for stacking a sheet-shaped workpiece and a method therefor.

### BACKGROUND ART

Known is a method of forming a layered shaped body having a three-dimensional structure by cutting out plural sheet-shaped workpieces from a sheet material and sequentially stacking the cut-out workpieces. Shape accuracy of the layered shaped body depends not only on shape accuracy of the plural cut-out workpieces, but also on stacking accuracy. The stacking accuracy is affected by position detection accuracy of the workpieces while the workpieces are conveyed. As technology for improving position detection accuracy of workpieces, technology disclosed in a Patent Literature 1 listed below is known.

### CITATION LIST

### PATENT LITERATURE

Patent Literature 1: Japanese Patent Application Publication No. 2013-233639

### SUMMARY OF THE INVENTION

### PROBLEM TO BE SOLVED

A workpiece handled by the technology disclosed in the Patent Literature 1 is a press-formed body having a three-dimensional identical shape. A camera is fixed above a location where the workpiece is picked up and upstream from the location along a conveyance path, and thereby a position and an orientation of the workpiece is detected by it to improve the accuracy of the position detection when picking-up the workpiece. In the technology disclosed in the Patent Literature 1, three-dimensional shaped workpieces are sequentially picked up and then stacked, but each stacking potion of them is self-aligned by its three-dimensional shape while being guided by the workpiece below. In other words, it is not intended to form a three-dimensional structure by stacking many sheet-shaped workpieces each having a two-dimensional shape, and high stacking accuracy is not required.

Since an apparatus of the present disclosure forms a layered shaped body having a three-dimensional structure by stacking sheet-shaped workpieces as described above, high stacking accuracy is required. The camera fixed above the pick-up location and upstream from the location along the conveyance route detects the workpiece in motion before it is picked up, so that it cannot sufficiently improve positional accuracy during stacking.

An object of the present disclosure is to provide an apparatus and a method for stacking a sheet-shaped workpiece that can achieve high stacking accuracy.

### SOLUTION TO PROBLEM

An apparatus for stacking a sheet-shaped workpiece according to the present disclosure includes a pick-and-place machine that holds and picks up a sheet-shaped workpiece cut out from a sheet material and places the workpiece onto a stacking position to stack sequentially, a detector that is provided in the pick-and-place machine and detects a position of the workpiece in a lifted state by the pick-and-place machine, and a controller that calculates a position shift of the workpiece based on the position of the workpiece detected by the detector and controls the pick-and-place machine to adjust, based on the calculated position shift, a holding position of a workpiece by the pick-and-place machine in a future operation.

In addition, the stacking machine may further include a place position compensator that compensates placing of the workpiece onto the stacking position by the pick-and-place machine.

Here, the place position compensator may be the controller, and the controller may control the pick-and-place machine to compensate placing of the workpiece onto the stacking position based on the calculated position shift.

Or, the place position compensator may be a position alignment jig that is provided at the stacking position and accommodates a commonly-shaped portion formed commonly in the workpiece to be stacked. The aforementioned position compensation by the controller as the place position compensator and the position compensation by the position alignment jig as the place position compensator may be used in combination, or either one may be used alone.

In addition, the detector may detect a commonly-shaped portion formed commonly in the workpiece to be stacked, and the controller may calculate the position shift of the workpiece based on a position of the commonly-shaped portion detected by the detector.

In addition, the stacking apparatus may further include a cutter machine that includes a cutting die and a roller press to cut out the workpiece.

In a method for stacking a sheet-shaped workpiece according to the present disclosure, workpieces are sequentially stacked by repeating following first to fourth steps. The first step for picking up a sheet-shaped workpiece cut out from a sheet material. The second step for detecting a position of the workpiece in a lifted state. The third step for calculating a position shift of the workpiece based on the detected position of the workpiece. The fourth step for placing down the workpiece onto a stacking position while compensating a placing position of the workpiece based on the calculated position shift. Here, a holding position of a workpiece in the first step in a future operation may be adjusted based on the position shift calculated in the third step.

In addition, in the second step, a commonly-shaped portion formed commonly in the workpiece may detected, and, in the third step, the position shift of the workpiece may be calculated based on a detected position of the commonly-shaped portion.

In addition, cutting-out of the workpiece from the sheet material may be done by using a cutting die and a roller press.

### ADVANTAGEOUS EFFECT

According to the apparatus and the method for stacking sheet-shaped workpieces, it is possible to achieve high stacking accuracy.

### BRIEF DESCRIPTION OF DRAWINGS

[FIG. 1] Fig. 1 is a plan view of a stacking apparatus according to an embodiment.
[FIG. 2] Fig. 2 is a cross-sectional view showing a cutting state at a roller press of the stacking apparatus.
[FIG. 3] Fig. 3 is a perspective view of the roller press.
[FIG. 4] Fig. 4 is a plan view showing cutting-out of workpieces from a sheet material.
[FIG. 5] Fig. 5 is a plan view showing a staked state of the workpieces.
[FIG. 6] Fig. 6 is an enlarged perspective view showing a commonly-shaped portion formed on a workpiece and a position aligning jig that accommodates the commonly-shaped portion.
[FIG. 7] It is a timing chart showing a stacking method done by the stacking apparatus.

### DESCRIPTION OF EMBODIMENTS

Hereinafter, an embodiment of the apparatus and the method for stacking a sheet-shaped workpiece will be described with reference to the drawings.

The stacking apparatus 1 in the present embodiment punches out plural sheet-shaped workpieces W from a sheet material S by using cutting dies 30 and a roller press 3, and then stacks them sequentially. Note that the sheet material S in the present embodiment is thermoplastic resin. The sheet-shaped workpieces W are hereinafter simply referred to as workpieces W. The plural workpieces W punched out from the sheet material S are sequentially picked up by a pick-and-place machine 4 and moved to a stacking position PL, and then place down onto the stacking position PL to be stacked.

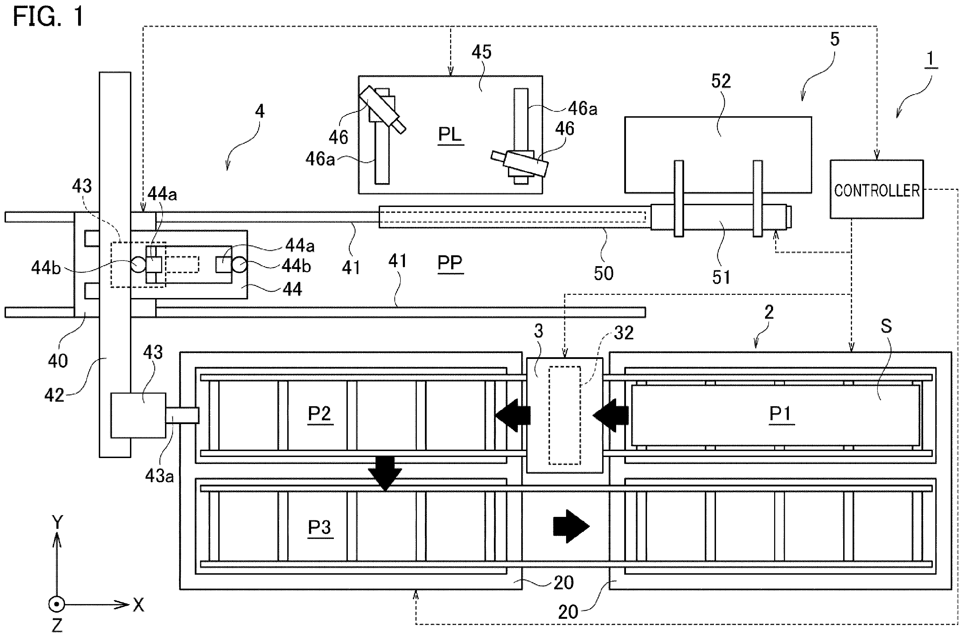

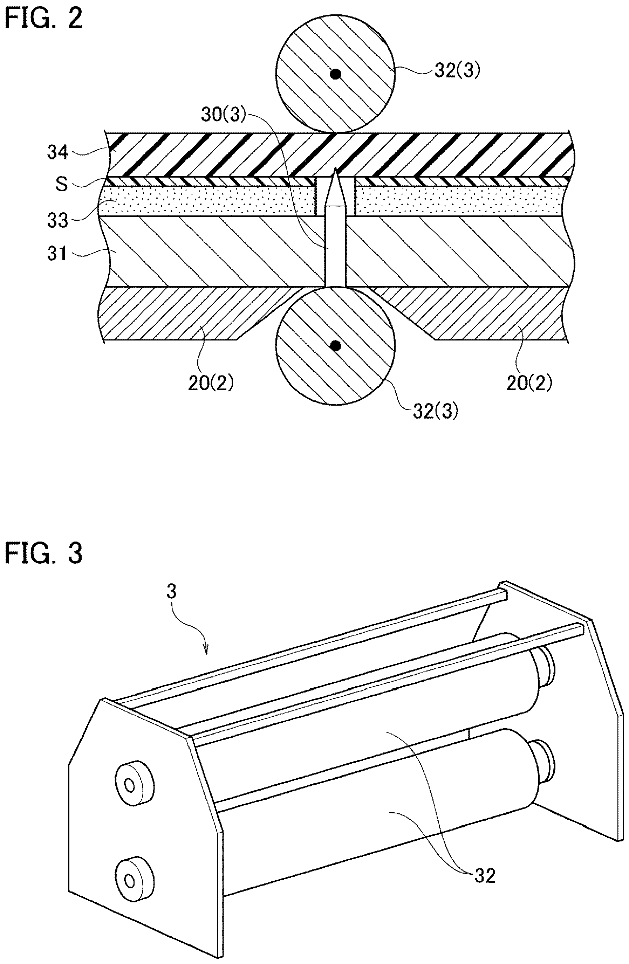

As shown in a plan view in Fig. 1, the stacking apparatus 1 includes a sheet conveying machine 2, a roller press 3, the pick-and-place machine 4, a carrying-out machine 5, and a controller 6. The sheet conveying machine 2 includes four conveyors that carry the sheet member S. As will be explained in detail later, in the present embodiment, the sheet member S is conveyed on the sheet conveying machine 2 while being layered with a wooden frame 31, to which the cutting dies 30 are set, and so on, and then pressed by the roller press 3 located on the conveyance path, as shown in Fig. 2. As a result, the plural workpieces W are cut out from the sheet member S.

In the sheet conveying machine 2, the sheet material S is conveyed as indicated by black arrows in Fig. 1. More specifically, the sheet material S is supplied to a first position P1. As described above, the sheet material S is layered with the wooden frame 31 and so on. While the sheet material S is conveyed from the first position P1 to a second position P2, the workpieces W are cut out by the roller press 3 arranged between the first position P1 and the second position P2. The cut-out workpieces W are moved from the second position P2 to the stacking position PL by the pick-and-place machine 4. The conveyance of the workpieces W from the second position P2 to the stacking position PL will be described in detail later. After the workpieces W have been moved, the wooden frame 31 and so on are moved to a third position P3 on an adjacent conveyance path.

On the adjacent conveyance path including the third position P3, the wooden frame 31 and so on are moved again to the first position P1, and then conveyed on the above-describe conveyance path together with the sheet material S supplied at the first position P1. The roller press 3 is a cutter machine that cuts out the workpieces W from the sheet material S. The cutting dies 30 and the wooden frame 31 are also included in the cutter machine. The roller press 3 has a pair of rollers 32 as shown in Fig. 3. By pressing the cutting dies 30 onto the sheet material S by this pair of rollers 32, the workpieces W are cut out.

A lower roller 32 of the pair of rollers 32 is a drive roller and its upper roller is a driven roller. A rotation speed of the lower roller 32 is synchronized with a conveyance speed of the workpieces W by the conveyors of the sheet conveying machine 2. The sheet material S is fed to the roller press 3 in a layered state as shown in Fig. 2. Fig. 2 shows a state in which the cutting die 30 is pressed onto the sheet material S by the roller press 3 and the sheet material S is cut by an upper edge, i.e., a cutting blade, of the cutting die 30. Although the cutting die 30 has a frame shape, Fig. 2 shows a state in which part of the cutting die 30 is cutting the sheet material S.

The layered state of the sheet material S will be described. The sheet material S is placed on the cutting dies 30 provided in the wooden frame 31. Between the sheet material S and the wooden frame 31, a sheet sponge 33 for protecting an underside of the sheet material S is also interposed. A slit is preliminarily formed in the sponge 33 according to the shape of the cutting dies 30, and the cutting blades of the cutting dies 30 are not exposed by the sponge 33 to improve safety. A sheet-shaped plastic cover 34 for receiving the cutting blades of the cutting dies 30 is also placed on the sheet material S. The plastic cover 34 is transparent, for example, and a cutting state can be checked to some extent from above. The wooden frame 31 is conveyed on conveyor tables 20 of the sheet conveying machine 2.

The cutting die 30 has a shape corresponding to an outline of the workpiece W to be cut out, and is set on the wooden frame 31 so that the cutting blade at its upper edge protrudes from an upper face of the wooden frame 31. A distance between the pair of rollers 32 is smaller than a thickness of the layered member described above, and the cutting die 30 is moved relative to the sheet material S by the pair of rollers 32 when the layered member is fed between the pair of rollers 32 by the sheet conveying machine 2. As a result, the sheet member S is cut by the cutting blade of the cutting die 30 as shown in Fig. 2, and the workpiece W is cut out. At this time, the sponge 33 is compressed, and an elastic restoring force of the sponge 33 facilitates separation of the cut-out workpiece W from the cutting die 30.

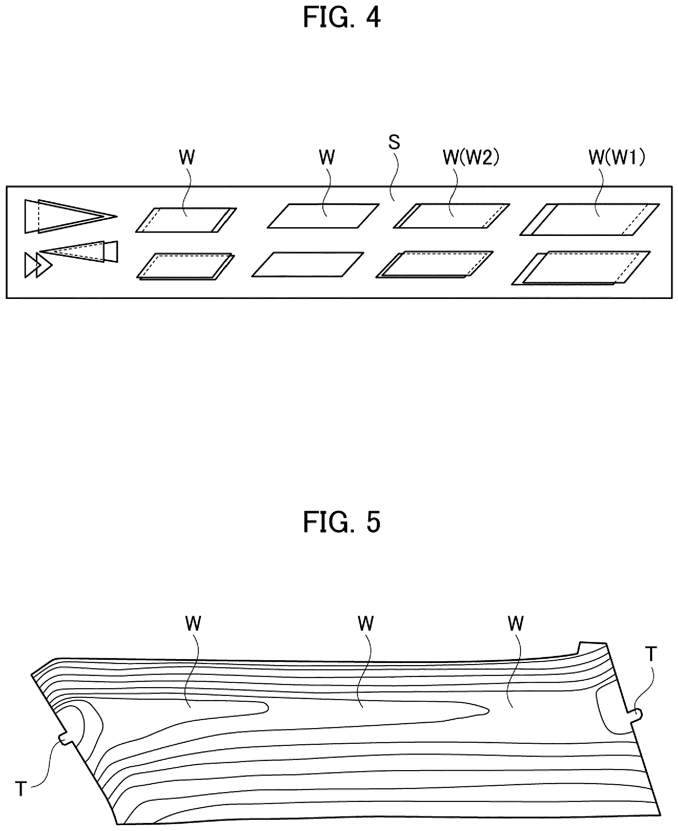

As shown in a schematic diagram in Fig. 4, a position of the workpiece W cut by the roller press 3 may shift relative to a position of the cutting die 30. Although the roller press 3 has a simple structure and can cut the workpieces W at high speed to achieve high cutting efficiency, such a position shift can occur. The position shift at the roller press 3 occurs especially in a conveying direction. In the present embodiment, the position shift can be efficiently compensated. The compensation of the position shift will be described later.

Next, the pick-and-place machine 4 will be described. The pick-and-place machine 4 has a base 40. The base 40 is movable in an X direction in Fig. 1 along a pair of parallel first rails 41 extended on a floor. A pole is vertically raised from the base 40, and a second rail 42 is fixed to an upper end of the pole. The second rail 42 extends in a Y direction in Fig. 1. A picker 43 is attached to the second rail 42 that is movable along the second rail 42, i.e., in the Y direction, which is perpendicular to the X direction.

The picker 43 has an arm 43a that is vertically movable, i.e., movable in a Z direction, which is perpendicular to both the X and Y directions. The arm 43a has plural suction pads that utilize negative pressure. The arm 43a holds and lifts up the workpiece W cut out at the second position P2 by its suction pads and moves it to the stacking position PL described later, and then places it down on the stacking position PL. The conveyance from the second position P2 to the stacking position PL is done by vertical motions of the arm 43a (the Z direction motions), a motion of the picker 43 along the second rail 42 (the Y direction motion), and a motion of the base 40 along the first rails 41 (the X direction motion).

The pick-and-place machine 4 is also provided with a pair of cameras 44a that detect the position of the workpiece W as it is lifted up by the arm 43a of the picker 43. A frame 44 protruding in the X direction is fixed near a root of the above-mentioned pole raised from the base 40, and the cameras 44a are fixed to this frame 44. In the vicinity of each of the cameras 44a, there is also a light 44b that illuminates light from below toward a background plate provided above a holding position of the workpiece W.

The position of the workpiece W can be detected by photographing the workpiece W lifted by the arm 43a of the picker 43, which is positioned at its reference position, from below by the cameras 44a. At that moment, an outline shape of the workpiece W can be reliably detected by illuminating the background plate with the lights 44b. That is, the cameras 44a are a detector that detects the position of the workpiece W in the lifted state. The detector may be an image sensor such as the cameras 44a, or other types of sensors, such as a laser sensor, as long as it can detect a shape. In Fig. 1, the reference position of the picker 43 is indicated by dotted lines.

The pick-and-place machine 4 also includes a stacking table 45 on an opposite side of the second position P2 with respect to the pair of first rails 41. A top face of the stacking table 45 is the stacking position PL on which the workpieces W are placed, and the workpieces W are sequentially stacked at this stacking position PL. A height level of the top face of the stacking table 45 is almost the same as a height level of the top face of the conveyor tables 20 of the sheet conveying machine 2. The stacking table 45 may be configured to be vertically adjustable in height according to a stacking height of the workpieces W stacked on it. In this way, the height of the newly stacked workpieces W can always be maintained at a constant height, and thereby the stacking accuracy can be further improved.

In the present embodiment, a pair of welding machines 46 are provided on the stacking table 45 to temporarily fix each workpiece W as it is stacked. The welding machine(s) 46 has an indenter, and presses the indenter onto the workpiece W to melt the thermoplastic resin of the workpiece W by ultrasonic waves. Thereafter, when the thermoplastic resin cools and hardens, the position of the stacked workpiece W is temporarily fixed. After the temporary fixing is completed, the indenter is released from the workpiece W. Each of the welding machines 46 is mounted on the stacking table 45 via a third rail 46a for moving each of the welding machines 46 in the Y direction. The welding machines 46 can also be swiveled and thereby can change the position of the indenter, i.e., the temporary fixing position.

A position on the paired first rails 41 that faces the stacking table 45, i.e. the stacking position PL, is a pre-stacking waiting position PP. After the workpiece W to be stacked is lifted by the picker 43 at the second position P2, the picker 43 returns to the reference position. Then, the base 40 moves on the first rail 41, and the movement of the base 40 is temporarily stopped when the workpiece W is located at this pre-stacking waiting position PP. The position of the workpiece W is acquired by the above-mentioned camera 44a at the pre-stacking waiting position PP. Detection of the position shift of the workpiece W is done based on the acquired position, but it will be described later.

The stacking apparatus 1 also includes the carrying-out machine 5 that carries out a layered shaped body formed by stacking the workpieces W on the stacking table 45. Since the layered shaped body is not a completed product but a stack of the cut-out workpieces W that are temporarily fixed, it is carried out by the carrying-out machine 5. The carrying-out machine 5 has a lifter 51 that lifts the layered shaped body from the stacking table 45, and a carrying-out table 52. The lifter 51 is movable along a fourth rail 50 extended in the X direction. The carrying-out table 52 is located next to the stacking table 45 along the X direction.

In the present embodiment, a commonly-shaped portion(s) is formed on the workpiece W in order to improve the stacking accuracy of the workpieces W. Specifically, the commonly-shaped portion is formed as a tab T as shown in Fig. 5. The position detection of the workpiece W by the camera 44a is done by the controller 6 based on the position of this tab T by analyzing the image acquired by the camera 44a. The tab T is easy to be detected because it has a common shape, and thereby the detection accuracy can be improved. In the present embodiment, the tab T is formed at at least one end of each of the workpieces W as shown in Fig. 5, and the tabs T are stacked at both ends of the layered shaped body formed by stacking the workpieces W. Therefore, the two cameras 44a are provided to photograph the two tabs T, respectively, in the present embodiment. Since the tab T is photographed from below by the camera 44a while the light 44b illuminate the above-mentioned background plate, the shape of the tab T can be clearly photographed and the detection accuracy of its position can be improved. Since the position of the tab T is set fixedly and only the tab T need to be photographed, no background plate with a large area is needed.

As shown in Fig. 5, the tabs T each of which serves as the commonly-shaped portion are located at the same position in a plan view in the layered shaped body formed by stacking the workpieces W. Therefore, the detection accuracy of their positions can be improved by detecting the positions of the workpieces W based on such tabs T, and the calculation accuracy of the position shift based on the detected positions can also be improved. Note that, depending on locations where the tabs are formed and a shape of the workpiece to be stacked, there may be a case where it is impossible to form the tab on all the workpieces W. However, the locations of the tabs T are set so that they can be formed on as many workpieces W as possible. If the tabs T are not necessary, they are cut off before the layered shaped body is completed as a product.

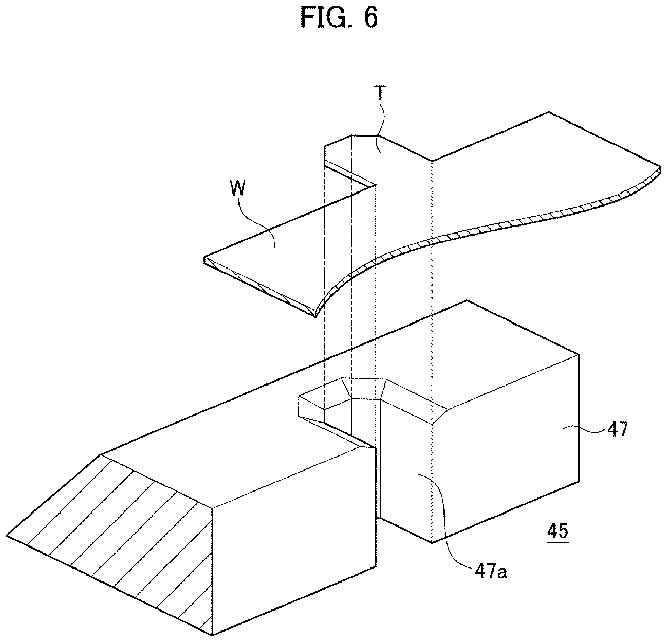

Furthermore, in the present embodiment, the above-mentioned tabs T are also used to improve the stacking accuracy by guiding the positions of the workpieces W when stacking the workpieces W on the stacking table 45, i.e., the stacking position PL. As shown in Fig. 6, a position alignment jig(s) 47 is provided on the stacking table 45 to accommodate the tab T, i.e., the commonly-shaped portion. An accommodation recess 47a is formed in the position alignment jig 47 and a tapered portion is formed at an upper edge of the accommodation recess 47a. Therefore, the tabs T are guided and accommodated in the accommodation recess 47a when the workpieces W are placed down on the stacking position PL, and thereby the stacking accuracy of the workpieces W can be improved.

The sheet conveying machine 2, the roller press 3, the pick-and-place machine 4 and the carrying-out machine 5 described above are connected to the controller 6, and their operations are controlled by the controller 6. Next, the stacking method using the above-described stacking apparatus 1 will be explained.

First, the layered member, that is formed by layering the sponge 33, the sheet member S and the plastic cover 34 on the wooden frame 31 in which the cutting dies 30 are set, is supplied to the first position P1 of the sheet conveying machine 2. The conveyors of the sheet conveying machine 2 and the roller press 3 are controlled by the controller 6, so that the sheet member S, that is, the cut-out workpieces W, are sent to the second position P2 while the workpieces W are cut out from the sheet member S. At the second position P2, the plastic cover 34 is removed. At this time, the position shifts of the workpieces W may occur as shown in Fig. 4.

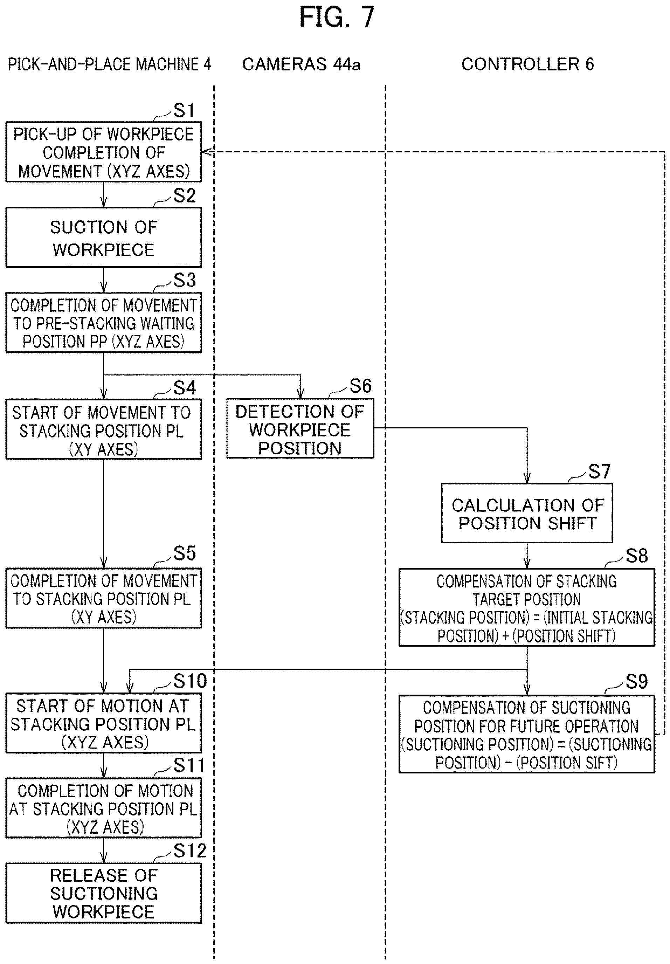

Next, the workpieces W are sequentially moved to the stacking position PL by the pick-and-place machine 4 to be stacked. This will be explained with reference to a timing chart shown in Fig. 7. First, the arm 43a of the picker 43 is moved to a position directly above the workpiece W to be lifted by the motion of the base 40 along the first rails 41 (X-direction movement) and the motion of the picker 43 along the second rail 42 (Y-direction movement). Then, the arm 43a is moved downward (Z-direction movement) and the lower end of the arm 43a is contacted with the workpiece W (step S1).

Subsequently, the workpiece W, e.g., the workpiece W1 in Fig. 4, is sucked by using negative pressure (step S2). Then, the workpiece W is lifted by the upward motion of the arm 43a (Z-direction movement) and the picker 43 is returned to the reference position along the second rail 42 (Y-direction movement). In addition, the workpiece W is moved to the pre-stacking waiting position PP by the motion of the base 40 along the first rails 41 (X-direction movement) (step S3). This Y-directional movement and the X-directional movement are done in parallel. Note that the height level of the workpiece W may be adjusted at the pre-stacking standby position PP by the vertical motion of the arm 43a (Z-direction movement).

Then, the workpiece W is moved horizontally (XY direction movement) to a position directly above the stacking position PL (steps S4-S5). As shown in Fig. 4, the positon shift of the workpiece W may occurs when it is lifted, and the position of the workpiece W is detected just before the start of the step S4 in order to compensate this position shift. In parallel with the steps S4-S5, the position shift is calculated by the controller 6 based on the detected position of the workpiece W (steps S6-S8). The steps S6 to S8 will be described in more detail.

Between the steps S3 and S4, the workpiece W is briefly stopped at the pre-stacking waiting position PP. In this state, the workpiece is photographed from below by the camera 44a (step S6). If the sheet-shaped workpiece W is flexible, the workpiece W may deform slightly while it is moving and thereby it may become impossible to get its accurate shape. However, the workpiece W is photographed in the above-mentioned stopped state in the present embodiment, so its accurate shape can be acquired.

In addition, the cameras 44a are fixed to the pick-and-place machine 4. Although the picker 43 also moves along the second rail 42, but the motion of the picker 43 is done in the pick-and-place machine 4. Furthermore, the picker 43 is in the reference position when the cameras 44a are taking pictures. That is, the positions of the cameras 44a with respect to the workpiece W to be photographed are fixed in the pick-and-place machine 4, and the position of the workpiece W in the lifted state can be accurately detected.

The tab(s) T formed on the workpiece W is used to detect the position of the workpiece W as described above, thus the detection accuracy can be improved. Next, the controller 6 calculates the position shift by image processing based on the acquired shape of the workpiece W, i.e., the detected position of the workpiece W (step S7). A compensation is calculated for stacking the workpiece W at the stacking position PL based on the calculated position shift (step S8). Furthermore, a compensation value for a future operation of the workpiece, i.e., a compensation value for picking-up of the same workpiece W1, is also calculated here (Step S9). The "future operation" refers to a subsequent process in which the workpiece W cut out by the same cutting die 30 is held by the pick-and-place machine 4. Note that the same cutting die 30 refers to the cutting die 30 provided at the same positon in the identical wooden frame 31 or provided in the wooden frame 31 having the same specification.

A position shift may occur as shown in Fig 4 also when cutting out a workpiece W from the next sheet material S. The position shift does not always coincide perfectly each time, but the position shift has a similar tendency. Therefore, by reflecting the position shift calculated in the step S9 in the adjustment of the holding position of the same workpiece W1 in the future operation, it is possible to reduce the shift of the holding position of the workpiece W in the future operation, and thereby the stacking accuracy can be improved.

Upon the completion of the step S5, the workpiece W is positioned directly above the stacking position PL. From this state, the workpiece W is placed down to the stacking position PL (Z-direction movement) while the position shift is compensated (XY-direction movement) (steps S10-S11). The XY direction movement here is done by moving the base 40 and the picker 43 while reflecting the calculation in the step S8. The Z-direction movement is done by the vertical motion of the arm 43a.

Since an X-direction travel distance for this compensation of the position shift is minute, a mechanism for this X-direction travel may be incorporated in the picker 43 or the arm 43a. Although the compensation of the position shift is described here only in terms of the motion the XYZ direction, a mechanism for rotation in the horizontal plane may be incorporated in the picker 43 or the arm 43a. In this way, the flexibility of the compensation can be increased. After the step S11, the suction by the arm 43a is released (step S12), and then the pick-and-place machine 4 starts moving to pick up the next workpiece W, e.g., the workpiece W2 in Fig. 4.

The temporary fixing of the stacked workpieces W on the stacking table 45 described above may be done while the placed workpieces W are held by the arm 43a, or after the suction by the arm 43a is released. In the present embodiment, the position shift calculated in the step S8 is compensated by the pick-and-place machine 4 controlled by the controller 6 when the workpiece W is placed on the stacking position PL, as described above. However, in the present embodiment, it can be further compensated by the above-mentioned position alignment jig(s) 47 shown in Fig. 6.

That is, the controller 6 functions as a place position compensator in the present embodiment and controls the pick-and-place machine 4 to compensate for placing the workpiece W onto the stacking position PL based on the calculated position shift of the workpiece W. At the same time, the position alignment jig(s) 47 that accommodates the tab T, which is the commonly-shaped portion, also functions as the place position compensator. The above-described steps S1 through S12 are repeated, and the workpieces W in the second position P2 are sequentially stacked to form the layered shaped body having a three-dimensional shape as shown in Fig. 5. The layered shaped body is carried out from the stacking position PL by the carrying-out machine 5.

The stacking apparatus 1 of the present embodiment is provided with the cameras 44a as the detector installed in the pick-and-place machine 4, which detect the position of the workpiece W in the state lifted by the pick-and-place machine 4. The controller 6 calculates the position shift of the workpiece W based on the position of the workpiece W detected by the cameras 44a, and controls the pick-and-place machine 4 to adjust the holding position of the workpiece W by the pick-and-place machine 4 in the future operation based on the calculated position shift. Therefore, according to the stacking apparatus 1 of the present embodiment, the position shift of the workpiece W in the lifted state immediately before it is stacked is calculated by using the cameras 44a as the detector installed in the pick-and-place machine 4 thereof. Then, the holding position of the workpiece W by the pick-and-place machine 4 in the future operation is adjusted based on the calculated position shift. As a result, a high stacking accuracy can ultimately be achieved by improving the accuracy of the holding position. Even if the degree of the position shift changes gradually due to wear of the cutting blade of the cutting die 30, the holding position can be automatically compensated according to such changes. Accordingly, the compensating motion at the stacking position PL can be prevented from becoming large.

In addition, the improved accuracy of the holding position reduces the compensating motion of the workpiece W at the stacking position PL, so the area of the stacking position PL does not have to be large. Furthermore, in a case where the welding machine(s) 46 and the third rail(s) 46a are provided as in the present embodiment, it becomes possible to install the machine closer to the workpiece W.

Here, since the place position compensator, which compensates for the placing of the workpieces W onto the stacking position by the pick-and-place machine 4, is further provided, the stacking accuracy can be improved even when stacking the workpieces W according to the present embodiment. And in particular in the present embodiment, two of the place position compensators are used together.

The one is that the controller 6, as the place position compensator, compensates for the placing of the workpiece W onto the stacking position PL based on the calculated position shift of the workpiece W. Thus, without requiring further configuration, the stacking accuracy during stacking can be directly improved in addition to the stacking accuracy improvement due to the holding position accuracy improvement.

The other is that the position alignment jig(s) 47 that accommodates the tabs T as the commonly-shaped portions commonly formed on the workpieces W at the stacking position PL is also provided as the place position compensator. By providing the simple position alignment jig(s) 47, the stacking accuracy during stacking can be improved by utilizing the mandatory operation of placing down the workpiece W in addition to the stacking accuracy improvement due to the holding position accuracy improvement.

According to the present embodiment, the camera(s) 44a as the detector detects the position of the tab T as the commonly-shaped portion, and the controller 6 calculates the position shift based on the position of the detected commonly-shaped portion. The commonly-shaped portion having a common shape is easy to be detected and thereby the detection accuracy of the position shift can be improved. As a result, the stacking accuracy can be further improved ultimately.

Furthermore, the stacking apparatus 1 of the present embodiment further includes the cutter machine having the cutting die(s) 30 and the roller press 3, which cuts out the sheet-shaped workpieces W from the sheet material S. The cutting-out of the workpieces W by the die(s) 30 and the roller press 3 can improve the work efficiency. On the other hand, the workpiece W before being lifted by the pick-and-place machine 4 is prone to have the position shift, but the stacking apparatus 1 of the present embodiment can lift the workpiece W while compensating the position shift. In other words, the high stacking accuracy can be achieved while maintaining the high work efficiency.

In the stacking method according to the present embodiment, the sheet-shaped workpieces W are stacked sequentially by repeating following first through fourth steps. The first step of holding and picking up the sheet-shaped workpiece W cut from the sheet material S. The second step of detecting the position of the workpiece W in the lifted state. The third step of calculating the position shift of the workpiece W based on the detected position of the workpiece. The workpiece is placed down to the stacking position PL while compensating the stacking position PL of the workpiece W based on the calculated position shift. That is, the placing of the workpiece W onto the stacking position PL is compensated based on the position shift of the workpiece W in the lifted state immediately before stacking. Therefore, the stacking accuracy can be directly improved during stacking. Furthermore, the holding position of the workpiece W in the first step in the future operation is adjusted based on the position shift calculated in the third step. Therefore, the stacking accuracy can also be improved by improving the accuracy of the holding position.

In addition, in the stacking method of the present embodiment, the position of the tab T as the commonly-shaped portion commonly formed on the workpieces W to be stacked is detected in the second step. Furthermore, the position shift of the workpieces W is calculated in the third step based on the detected position of the tab T as the commonly-shaped portion. The commonly-shaped portion having the common shape is easy to be detected, and thereby the detection accuracy of the position shift can be improved. As a result, the stacking accuracy can be further improved ultimately.

Furthermore, since the cutting die(s) 30 and the roller press 3 are used to cut out the sheet-shaped workpiece W from the sheet material S in the stacking method of the present embodiment, it is possible to achieve the high stacking accuracy while maintaining the high work efficiency, as described above.

In the stacking apparatus of sheet-shaped workpieces in the present disclosure, the workpieces W to be stacked are cut out from the thermoplastic sheet material S. However, the workpieces W to be stacked may be other types of sheet-shaped workpieces, for example, workpieces cut out from sheet metal. In addition, the workpieces W are cut out from the sheet material S by the roller press 3 in the present embodiment. As mentioned above, the stacking apparatus 1 of the present disclosure is effective because the cutting-out by the roller press 3 is prone to bring the position shift of the cut-out workpieces W. However, the cutter machine that cuts out the workpieces W from the sheet material S may be another type of cutter machine, for example, a laser cutting machine.

### EXPLANATIONS OF REFERENCE SIGNS

- 1: stacking apparatus of sheet-shaped workpiece
- 3: roller press
- 30: cutting die
- 4: pick-and-place machine
- 44a: camera (detector)
- 47: position alignment jig (place position compensator)
- 6: controller (place position compensator)
- PL: stacking position
- S: sheet material
- W: sheet-shaped workpiece
- T: tab (commonly-shaped portion)

## Claims

1. 2. An apparatus for stacking a sheet-shaped workpiece, the apparatus comprising:
a pick-and-place machine that holds and picks up a sheet-shaped workpiece cut out from a sheet material and places the workpiece onto a stacking position to stack sequentially;
a detector that is provided in the pick-and-place machine and detects a position of the workpiece in a lifted state by the pick-and-place machine; and
a controller that calculates a position shift of the workpiece based on the position of the workpiece detected by the detector and controls the pick-and-place machine to adjust, based on the calculated position shift, a holding position of a workpiece by the pick-and-place machine in a future operation.

2. The apparatus for stacking a sheet-shaped workpiece according to claim 1, further comprising
a place position compensator that compensates placing of the workpiece onto the stacking position by the pick-and-place machine.

3. The apparatus for stacking a sheet-shaped workpiece according to claim 2,
wherein the place position compensator is the controller, and
wherein the controller controls the pick-and-place machine to compensate placing of the workpiece onto the stacking position based on the calculated position shift.

4. The apparatus for stacking a sheet-shaped workpiece according to claim 2 or 3,
wherein the place position compensator is a position alignment jig that is provided at the stacking position and accommodates a commonly-shaped portion formed commonly in the workpiece to be stacked.

5. The apparatus for stacking a sheet-shaped workpiece according to any one of claims 1 to 4,
wherein the detector detects a commonly-shaped portion formed commonly in the workpiece to be stacked; and
wherein the controller calculates the position shift of the workpiece based on a position of the commonly-shaped portion detected by the detector.

6. The apparatus for stacking a sheet-shaped workpiece according to any one of claims 1 to 5, further comprising
a cutter machine that includes a cutting die and a roller press to cut out the workpiece.

7. A method for stacking a sheet-shaped workpiece, the method comprising:
sequentially stacking workpieces by repeating following first to fourth steps,
the first step for picking up a sheet-shaped workpiece cut out from a sheet material;
the second step for detecting a position of the workpiece in a lifted state;
the third step for calculating a position shift of the workpiece based on the detected position of the workpiece; and
the fourth step for placing down the workpiece onto a stacking position while compensating a placing position of the workpiece based on the calculated position shift,
wherein a holding position of a workpiece in the first step in a future operation is adjusted based on the position shift calculated in the third step.

8. The method for stacking a sheet-shaped workpiece, according to claim 7,
wherein, in the second step, a commonly-shaped portion formed commonly in the workpiece is detected, and
wherein, in the third step, the position shift of the workpiece is calculated based on a detected position of the commonly-shaped portion.

9. The method for stacking a sheet-shaped workpiece, according to claim 7 or 8,
wherein cutting-out of the workpiece from the sheet material is done by using a cutting die and a roller press.
